# FASCICULE DE BREVET EUROPEEN

(11) **EP 3 007 941 B1**
(45) Date de publication et mention de la délivrance du brevet: **11.09.2019**
(21) Numéro de dépôt: 14732261.4
(22) Date de dépôt: 12.05.2014
(51) Int. Cl.: B60S 1/04, B62D 25/08, B62D 25/14

(54) **DISPOSITIF DE SUPPORT POUR ESSUIE-VITRE**
TRÄGERVORRICHTUNG FÜR EINEN SCHEIBENWISCHER
SUPPORT DEVICE FOR WINDOW WIPER

(30) Priorité: 14.06.2013 FR 1355554
(43) Date de publication de la demande: 20.04.2016
(73) Titulaire: Renault s.a.s., 92100 Boulogne Billancourt (FR)
(72) Inventeur: DJEKOUANE, Karim, F-78630 Orgeval (FR); VERO, Emmanuel, F-78340 Les Clayes-Sous-Bois (FR); BUCUR, Radu, R-Sect. 6 Bucuresti (RO)
(86) Numéro de dépôt international: PCT/FR2014/051088
(87) Numéro de publication internationale: WO 2014/199030

(56) Documents cités:
- EP-A1- 2 181 912
- EP-A2- 1 346 903
- DE-A1-102004 007 350

## Description

### Domaine technique de l'invention

L'invention concerne la fixation d'un essuie-vitre dans la partie basse du pare-brise d'un véhicule automobile et notamment le dispositif de support sur lequel vient se fixer l'essuie-vitre, dans le cas de gammes de véhicules automobiles classiquement appelées « à direction à droite » et « à direction à gauche ».

L'invention concerne plus particulièrement un dispositif de support pour essuie-vitre agencé entre une traverse inférieure de baie supérieure et une cloison de chauffage inférieure appartenant à une structure d'un véhicule automobile, ledit dispositif de support comportant un orifice de fixation dudit essuie-vitre.

### Etat de la technique

Il existe deux principales familles ou gammes de véhicules automobiles, classiquement appelées « à direction à droite » ou « à direction à gauche ». Selon la gamme de véhicules considérée, l'agencement et l'architecture du véhicule au niveau du compartiment moteur avant et au niveau de la zone sous pare-brise diffèrent sensiblement.

Concernant plus particulièrement l'agencement d'un essuie-vitre au niveau d'une boîte à eau d'une structure de véhicule automobile, laquelle boîte à eau est notamment formée par une traverse inférieure de baie supérieure et une cloison de chauffage inférieure, il est connu d'avoir un dispositif de support pour l'essuie vitre, agencé plus particulièrement côté gauche, selon un axe longitudinal du véhicule, dans le cas d'un véhicule du type « à direction à gauche » et d'avoir un dispositif de support agencé plus particulièrement côté droit, selon un axe longitudinal du véhicule, dans le cas d'un véhicule du type « à direction à droite ».

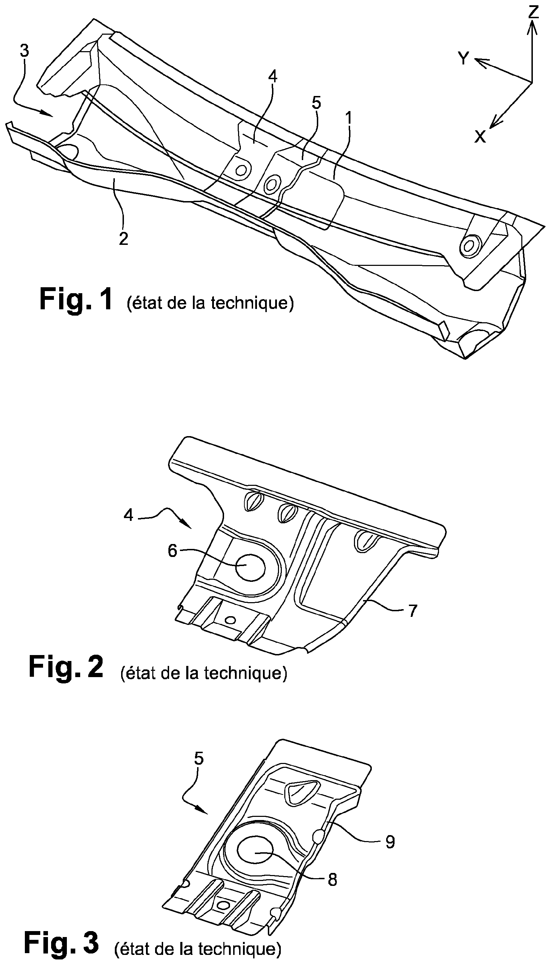

Comme représenté plus particulièrement sur la figure 1, illustrant un exemple connu d'un tel agencement, une traverse inférieure de baie 1 supérieure forme sensiblement avec une cloison de chauffage 2 inférieure une zone sous pare-brise du véhicule (non représenté complètement sur les figures pour des raisons de clarté) appelée communément « boîte à eau » 3. Sur la figure 1, un dispositif de support 4, spécifiquement destiné à un véhicule du type « à direction à droite » est destiné à être fixé dans la boîte à eau 3, plus particulièrement du côté droit du véhicule par rapport à un axe longitudinal X du véhicule, représentant le sens de déplacement en marche avant du véhicule. De même, un dispositif de support 5, spécifiquement destiné à un véhicule du type « à direction à gauche » est destiné à être fixé dans la boîte à eau 3, plus particulièrement du côté gauche du véhicule par rapport à un axe longitudinal X du véhicule, représentant le sens de déplacement en marche avant du véhicule. Sur la figure 1, les deux dispositifs de support 4, 5 classiques sont représentés en superposition dans la boîte à eau 3. Dans la réalité, un seul dispositif de support est associé à la fixation d'un essuie-vitre.

Comme représenté plus particulièrement sur la figure 2, le dispositif de support 4 comporte un orifice 6 de fixation pour l'essuie-vitre associé et est conformé, à savoir comporte une forme, un contour 7 et des dimensions, de sorte à s'adapter à l'environnement et aux contraintes associées à la gamme du véhicule considéré (notamment son interface avec la caisse du véhicule), à savoir du type « à direction à droite ».

Comme représenté plus particulièrement sur la figure 3, le dispositif de support 5 comporte un orifice 8 de fixation pour l'essuie-vitre associé et est conformé, à savoir comporte une forme, un contour 9 et des dimensions, différentes du dispositif de support 4 représenté sur la figure 2, de sorte à s'adapter à l'environnement et aux contraintes associées à la gamme du véhicule considéré, à savoir du type « à direction à gauche ». L'interface avec la caisse est donc différente selon la gamme du véhicule automobile considérée.

De tels dispositifs de support sont donc étroitement liés au type de véhicule automobile considéré, ce qui implique donc une conception différente pour chaque véhicule considéré et ce qui engendre un surcoût important en termes de matières, de processus de fabrication, etc.

Par ailleurs le document EP 1 346 903 A2 décrit un véhicule automobile comprenant un support unique d'essuie-vitre agencé entre une traverse inférieure de baie et une cloison de chauffage appartenant à la structure du véhicule.

### Objet de l'invention

L'invention a pour but de remédier à l'ensemble des inconvénients précités et/ou d'améliorer les dispositifs connus et a pour objet un ensemble de deux gammes de véhicules automobiles du type "direction à droite" et du type "direction à gauche" comprenant un dispositif de support d'essuie-vitre qui soit simple de conception et qui puisse être utilisé pour toute gamme de véhicule automobile.

L'objet de l'invention est caractérisé, plus particulièrement, par le fait que le dispositif de support est conformé selon une unique pièce emboutie, identique quelle que soit la gamme de véhicules automobiles considérée, ledit orifice de fixation dudit essuie-vitre étant agencé sur une portion prédéfinie du dispositif de support, différente selon la gamme de véhicules automobiles considérée et ledit orifice de fixation étant positionné sur une surface à droite pour les véhicules "à direction à droite" et sur une surface à gauche pour les véhicules "à direction à gauche" et le dispositif de support comportant une conformation centrale ayant la forme d'un tunnel destinée notamment à optimiser sa raideur locale.

Un tel dispositif de support identique quelle que soit la gamme de véhicule automobile permet de faire des économies, notamment en termes de coûts de fabrication.

D'autres avantages et caractéristiques de l'invention peuvent être considérés isolément ou en combinaison.
- Le dispositif de support peut être agencé sensiblement dans une zone centrale de la traverse inférieure de baie et de la cloison de chauffage, par rapport à un axe longitudinal du véhicule.
- Le dispositif de support peut comporter des orifices de mise en géométrie pour sa fixation par rapport à la traverse inférieure de baie.
- Le dispositif de support peut comporter des conformation latérales pour s'adapter aux contraintes d'environnement pour sa fixation sous la traverse inférieure de baie et pour autoriser le débattement de l'essuie-vitre associé, quel que soit la gamme de véhicules automobiles considérée.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue schématique en perspective d'une partie d'une structure d'un véhicule automobile comportant deux modes de réalisation d'un dispositif de support selon l'art antérieur, associés chacun à un type de véhicule automobile, représentés en superposition dans la boîte à eau de la structure.
Les figures 2 et 3 représentent, respectivement, le dispositif de support selon la figure 1, destiné à une gamme de véhicules automobiles du type « à direction à droite », et le dispositif de support selon la figure 1, destiné à une gamme de véhicules automobiles du type « à direction à gauche ».

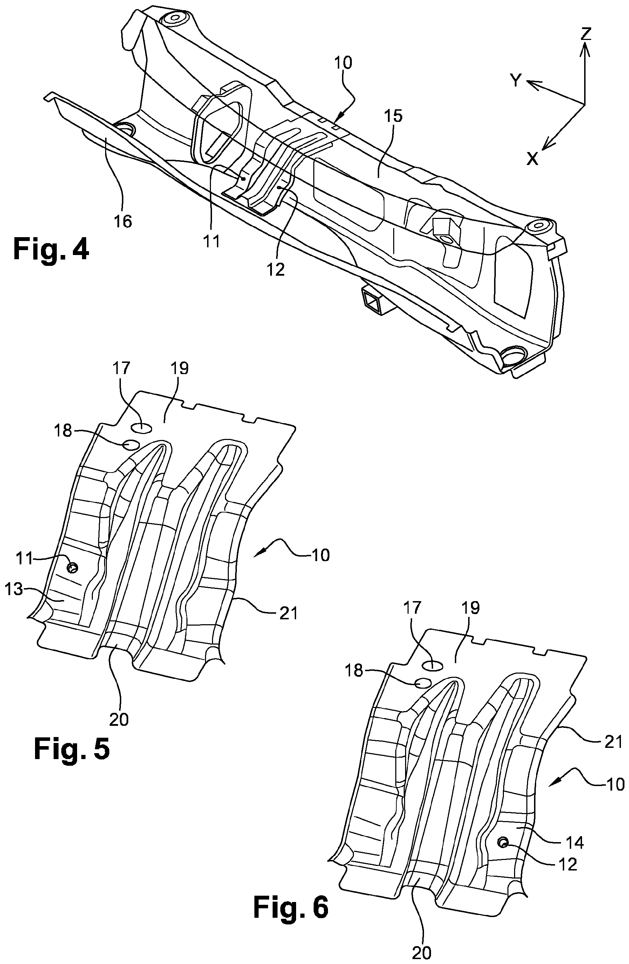

La figure 4 est une vue schématique en perspective d'une partie d'une structure d'un véhicule automobile comportant deux modes de réalisation d'un dispositif de support selon l'invention, associés chacun à un type de véhicule automobile, représentés en superposition dans la boîte à eau de la structure.
Les figures 5 et 6 représentent, respectivement, le dispositif de support selon la figure 4, destiné à une gamme de véhicules automobiles du type « à direction à droite », et le dispositif de support selon la figure 4, destiné à une gamme de véhicules automobiles du type « à direction à gauche ».

### Description de modes particuliers de réalisation

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur les figures 1 et 4 et aux définitions données dans la description. Notamment, la direction longitudinale X correspond au sens de déplacement en marche avant d'un véhicule automobile (non représenté sur les figures pour des raisons de clarté).

En référence aux figures 4 à 6, le dispositif de support 10 selon l'invention est une unique pièce emboutie conformée pour être identique quelle que soit la gamme de véhicules automobiles considérée. Selon la gamme de véhicule considérée, à savoir du type « à direction à droite » ou « à direction à gauche », l'unique distinction réside dans le positionnement d'un orifice 11, 12 de fixation d'un essuie-vitre associé, agencé sur une portion prédéfinie du dispositif de support 10, selon la gamme de véhicules automobiles considérée.

Comme représenté plus particulièrement sur la figure 4, où deux dispositifs de support 10 sont représentés en superposition (un seul étant visible compte tenu de leur identité de forme), l'orifice de fixation 11 du dispositif de support 10 est agencé sur une première surface 13 du dispositif de support 10 (figure 5) et l'orifice de fixation 12 du dispositif de support 10 est agencé sur une seconde surface 14 du dispositif de support 10 (figure 6).

Par ailleurs, le dispositif de support 10 est agencé sensiblement dans une zone centrale d'une traverse inférieure de baie 15 supérieure et d'une cloison de chauffage 16 inférieure, délimitant notamment une partie de la boîte à eau du véhicule automobile, par rapport à un axe longitudinal X du véhicule automobile.

Comme représenté plus particulièrement sur la figure 5, le dispositif de support 10 est destiné plus particulièrement à la gamme de véhicules automobiles du type « à direction à droite ». L'orifice de fixation 11 de l'essuie-vitre associé est positionné sur la première surface 13, agencée sur la droite du dispositif de support 10 par rapport à l'axe longitudinal X du véhicule (figure 4).

Comme représenté plus particulièrement sur la figure 6, le dispositif de support 10 est destiné plus particulièrement à la gamme de véhicules automobiles du type « à direction à gauche ». L'orifice de fixation 12 de l'essuie-vitre associé est positionné sur la seconde surface 14, agencée sur la gauche du dispositif de support 10 par rapport à l'axe longitudinal X du véhicule (figure 4).

Par ailleurs, quelle que soit la variante de réalisation considérée, à savoir le dispositif de support 10 avec l'orifice 11 sur la droite, comme représenté sur la figure 5, ou le dispositif de support 10 avec l'orifice 12 sur la gauche, comme représenté sur la figure 6, le dispositif de support 10 selon l'invention comporte avantageusement deux orifices 17, 18 de mise en géométrie, pour la fixation du dispositif de support 10 par rapport à la traverse inférieure de baie 15 supérieure. Plus particulièrement, le premier orifice 17 de mise en géométrie est de forme oblongue, le second orifice 18 de mise en géométrie est de forme circulaire et les deux orifices 17, 18 sont agencées sur une surface 19 dont l'orientation et l'inclinaison est conformée pour coopérer avec la surface de la traverse inférieure de baie 15 sur laquelle elle est destinée à venir fixer le dispositif de support 10 (figure 4).

Par ailleurs, le dispositif de support 10 selon l'invention comporte une conformation centrale 20, sensiblement sous la forme d'un tunnel, destinée notamment à optimiser la raideur locale du dispositif de support 10. De même, le dispositif de support 10 comporte des conformations latérales 21 sur son contour, destinées notamment à adapter le dispositif de support 10 aux contraintes d'environnement pour sa fixation sous la traverse inférieure de baie 15 supérieure et pour autoriser le débattement de l'essuie-vitre associé, quel que soit la gamme de véhicules automobiles considérée.

Ainsi, quel que soit le dispositif de support 10, celui-ci présente l'avantage principal d'être très robuste, de pouvoir être utilisé pour toutes les gammes de véhicules automobiles, malgré des interfaces différentes, et de permettre d'apporter localement une raideur statique, afin notamment d'optimiser le comportement de la caisse en acoustique. Un tel dispositif de support permet aussi et surtout la fixation de l'essuie-vitre associé en partie centrale du véhicule.

De même, un tel dispositif de support permet une optimisation en termes de qualité, coûts et délais. Notamment, une pièce peut ainsi être économisée ainsi qu'une gamme en emboutissage. Une réduction en termes d'ingénierie peut aussi être réalisée en termes de conception et de développement en vie série, en validation processus de fabrication, en validation calcul, etc.

L'invention n'est pas limitée aux différents modes de réalisation décrits ci-dessus. Notamment, la forme et les dimensions du dispositif de support peuvent être différentes, tant que le dispositif de support est une unique pièce quelle que soit la gamme du véhicule considérée et tant qu'il peut être fixé dans une partie sensiblement centrale de la boîte à eau du véhicule et qu'il présente une conformation centrale ayant la forme d'un tunnel destiné notamment à optimiser sa raideur locale.

Un tel dispositif de support s'applique donc à toutes les gammes de véhicules automobiles équipés d'essuies-vitres.

## Revendications

1. Ensemble de deux gammes de véhicules automobiles du type « direction à droite » et du type « direction à gauche » comprenant un dispositif de support (10) pour essuie-vitre agencé entre une traverse inférieure de baie (15) supérieure et une cloison de chauffage (16) inférieure appartenant à une structure des véhicules automobiles de chaque type, ledit dispositif de support (10) comportant un orifice de fixation (11 ; 12) dudit essuie-vitre, le dispositif de support étant conformé selon une unique pièce emboutie, identique quelle que soit la gamme de véhicules automobiles considérée, ledit orifice de fixation (11) dudit essuie-vitre étant agencé sur une première surface (13) prédéfinie du dispositif de support (10) agencée sur la droite du dispositif de support (10) des véhicules du type « direction à droite » tandis que l'orifice de fixation (12) dudit essuie-vitre est agencé sur une seconde surface (14) prédéfinie du dispositif de support (10), différente de la première surface (13), agencée sur la gauche du dispositif de support (10) des véhicules du type « direction à gauche », l'agencement sur la droite ou sur la gauche étant considéré par rapport à un axe longitudinal (X) du véhicule, le dispositif de support (10) comportant une conformation centrale (20) ayant la forme d'un tunnel destinée notamment à optimiser sa raideur locale.

2. Ensemble de deux gammes de véhicules automobiles selon la revendication 1, **caractérisé en ce que** le dispositif de support (10) est agencé sensiblement dans une zone centrale de la traverse inférieure de baie (15) et de la cloison de chauffage (16), par rapport à un axe longitudinal (X) du véhicule.

3. Ensemble de deux gammes de véhicules automobiles selon l'une quelconque des revendications précédentes, **caractérisé en ce que** le dispositif de support (10) comporte des orifices (17, 18) de mise en géométrie pour sa fixation par rapport à la traverse inférieure de baie (15).

4. Ensemble de deux gammes de véhicules automobiles selon l'une quelconque des revendications précédentes, **caractérisé en ce que** le dispositif de support (10) comporte des conformations latérales (21) pour s'adapter aux contraintes d'environnement pour sa fixation sous la traverse inférieure de baie (15) et pour autoriser le débattement de l'essuie-vitre associé, quel que soit la gamme de véhicules automobiles considérée.

## Patentansprüche

1. Einheit von zwei Kraftfahrzeugtypenreihen des Typs "Lenkung rechts" und des Typs "Lenkung links", aufweisend eine Trägervorrichtung (10) für Scheibenwischer, die zwischen einem unteren Querträger eines oberen Fensters (15) und einer unteren Heizungstrennwand (16) eingerichtet ist, die zu einer Struktur der Kraftfahrzeuge jedes Typs gehören, wobei die Trägervorrichtung (10) eine Befestigungsöffnung (11; 12) des Scheibenwischers aufweist, wobei die Trägervorrichtung gemäß einem einzigen tiefgezogenen Teil ausgebildet ist, das unabhängig von der betrachteten Kraftfahrzeugtypenreihe identisch ist, wobei die Befestigungsöffnung (11) des Scheibenwischers auf einer ersten vorher festgelegten Fläche (13) der Trägervorrichtung (10) eingerichtet ist, die auf der rechten Seite der Trägervorrichtung (10) der Fahrzeuge des Typs "Lenkung rechts" eingerichtet ist, wogegen die Befestigungsöffnung (12) des Scheibenwischers auf einer vorher festgelegten zweiten Fläche (14) der Trägervorrichtung (10) eingerichtet ist, die sich von der ersten Fläche (13) unterscheidet, die auf der linken Seite der Trägervorrichtung (10) der Fahrzeuge des Typs "Lenkung links" eingerichtet ist, wobei die Einrichtung rechts oder links in Bezug auf eine Längsachse (X) des Fahrzeugs berücksichtigt wird,
wobei die Trägervorrichtung (10) eine zentrale Ausformung (20) mit der Form eines Tunnels hat, die vor allem dazu bestimmt ist, ihre lokale Steifigkeit zu optimieren.

2. Einheit von zwei Kraftfahrzeugtypenreihen nach Anspruch 1, **dadurch gekennzeichnet, dass** die Trägervorrichtung (10) etwa in einer zentralen Zone des unteren Fensterquerträgers (15) und der Heizungstrennwand (16) in Bezug auf eine Längsachse (X) des Fahrzeugs eingerichtet ist.

3. Einheit von zwei Kraftfahrzeugtypenreihen nach einem der vorangehenden Ansprüche, **dadurch gekennzeichnet, dass** die Trägervorrichtung (10) Öffnungen (17, 18) zur geometrischen Anpassung für ihre Befestigung in Bezug auf den unteren Fensterquerträger (15) aufweist.

4. Einheit von zwei Kraftfahrzeugtypenreihen nach einem der vorangehenden Ansprüche, **dadurch gekennzeichnet, dass** die Trägervorrichtung (10) seitliche Ausformungen (21) aufweist, um sich an die Anforderungen des Umfelds für ihre Befestigung unter dem unteren Fensterquerträger (15) anzupassen und um das Ausschlagen des zugeordneten Scheibenwischers unabhängig von der betrachteten Kraftfahrzeugtypenreihe zu gestatten.

## Claims

1. Set of two lines of motor vehicles of the "right-hand drive" type and the "left-hand drive" type, comprising a windscreen-wiper support device (10) arranged between an upper window opening lower crossbeam (15) and a lower heating partition (16) belonging to a structure of each type of motor vehicle, said support device (10) having a fastening orifice (11; 12) for said windscreen wiper, the support device being formed as a single pressed part, which is identical regardless of the line of motor vehicles in question, said fastening orifice (11) for said windscreen wiper being arranged on a predefined first surface (13) of the support device (10) that is arranged on the right of the support device (10) of the vehicles of the "right-hand drive" type, while the fastening orifice (12) for said windscreen wiper is arranged on a second predefined surface (14) of the support device (10) that is different from the first surface (13) and is arranged on the left of the support device (10) of the vehicles of the "left-hand drive" type, the arrangement on the right or on the left being considered with respect to a longitudinal axis (X) of the vehicle, the support device (10) having a central formation (20) in the form of a tunnel that is intended notably to optimize the local stiffness thereof.

2. Set of two lines of motor vehicles according to Claim 1, **characterized in that** the support device (10) is arranged substantially in a central region of the window opening lower crossbeam (15) and of the heating partition (16), with respect to a longitudinal axis (X) of the vehicle.

3. Set of two lines of motor vehicles according to either one of the preceding claims, **characterized in that** the support device (10) has geometric positioning orifices (17, 18) for fastening it with respect to the window opening lower crossbeam (15).

4. Set of two lines of motor vehicles according to any one of the preceding claims, **characterized in that** the support device (10) has lateral formations (21) for adapting to the environmental constraints in order to be fastened under the window opening lower crossbeam (15) and to allow the travel of the associated windscreen, regardless of the line of motor vehicles in question.
